# EUROPEAN PATENT SPECIFICATION

(11) **EP 1 616 164 B1**
(45) Date of publication and mention of the grant of the patent: **30.12.2015**
(21) Application number: 04749675.7
(22) Date of filing: 02.04.2004
(51) Int. Cl.: B01L 3/00, G01N 21/03, G01N 30/74, G01N 30/60, G01N 21/05

(54) **MICROFLUIDIC DETECTION DEVICE**
MIKROFLUIDISCHE NACHWEISVORRICHTUNG
DISPOSITIF DE DETECTION MICROFLUIDIQUE

(30) Priority: 07.04.2003 US 410313
(43) Date of publication of application: 18.01.2006
(73) Proprietor: AB SCIEX LLC, NW Washington, DC 20006 (US)
(72) Inventor: CYR, Douglas, R., Livermore, CA 94550 (US); FARROW, Roger, L., Pleasanton, CA 94556 (US); ARNOLD, Don, W., Livermore, CA 94550 (US)
(74) Representative: Mollekopf, Gerd Willi
(86) International application number: PCT/US2004/010234
(87) International publication number: WO 2004/092702

(56) References cited:
- EP-A1- 1 306 661
- US-A- 4 823 168
- US-A- 5 140 169
- US-A- 6 020 207
- US-A1- 2002 024 662
- US-A1- 2002 071 123
- US-A1- 2002 171 836
- US-A1- 2003 076 491
- US-B1- 6 332 049
- US-B1- 6 542 231
- US-B1- 6 542 231
- LACKI P ET AL: "LIQUID CORE WAVEGUIDE AS A FLUORESCENCE SENSOR", EUROSENSORS. PROCEEDINGS OF THE EUROPEAN CONFERENCE ONSOLID-STATE TRANDUCERS AND THE UK CONFERENCE ON SENSORS ANDTHEIR APPLICATIONS, XX, XX, vol. 1, 13 September 1998 (1998-09-13), pages 343-346, XP000998572,

## Description

### BACKGROUND

The invention relates to microfluidic detection devices.

Liquid chromatography (LC) is used to separate, identify, purify and quantify components of mixtures. High performance LC (HPLC) typically uses columns 2.0 to 4.6 mm in diameter. Microcolumn LC (µLC) typically uses columns 2.0 mm or less in diameter. Optical detectors for examining HPLC samples are well known, but do not give satisfactory results when used to examine the much smaller samples from µLC columns.

U.S. Patent No. 6,542,231 (Garrett) discloses an optical detector for liquid samples from LC columns, including µLC columns. The sample is passed through a light pipe. The light pipe is a liquid flow cell that guides light by total internal reflection, this being achieved by constructing the light pipe of a material whose index of refraction is smaller than that of the liquid sample. Light is passed into the light pipe from a first optical fiber whose diameter is equal to or less than the diameter of the light pipe, and is removed from the light pipe by a second optical fiber whose diameter is equal to or greater than the diameter of the light pipe. In one embodiment, the liquid enters the device through a first end cap and leaves the device through a second end cap, the end caps being sealed to the ends of the light pipe. The first end cap has a section which is adjacent to one end of the light pipe and which, with a first optical fiber, defines a first annular space through which the liquid enters the light pipe. The second end cap has a section which is adjacent to the other end of the light pipe and which, with a second optical fiber, defines a second annular space through which liquid leaves the light pipe.

US 2002/0024662 A1 provides a small-sized, light-weight configuration of a micro-fluidic cell. In manufacturing the micro-fluid cell three substrates of Pyrex (or Silicon) are stacked together by using interlayers of a material (Silicon Nitride) different than Pyrex.

### SUMMARY OF THE INVENTION

The invention is defined in claim 1.

Particular embodiments are set out in the dependent claims.

An important problem in the examination of LC samples, particularly µLC samples, is dispersion, i.e. broadening of the peaks which are produced by the LC column. Dispersion takes place as the sample passes through all parts of the system (including any optical detector). We have discovered, in accordance with the present invention, that if the velocity of a liquid sample is higher near the walls of a detection cell as the liquid enters the detection cell and as it leaves the detection cell (i.e. higher than the velocity of the liquid near the walls elsewhere in the detection cell), this reduces the dispersion of the sample in the detection cell. This invention provides improved detection cells which make use of this discovery.

The invention provides a microfluidic detection device for examining a liquid sample, the device comprising
(a) an inlet having a first longitudinal axis;
(b) an outlet having a second longitudinal axis;
(c) a detection cell which
   (i) comprises walls defining a conduit which is in fluid connection with the inlet and the outlet, and
   (ii) has a third longitudinal axis, the third longitudinal axis being at an angle to the first longitudinal axis and at an angle to the second longitudinal axis;
(d) a first junction which lies between the inlet and the detection cell; and
(e) a second junction which lies between the detection cell and the outlet;
whereby a liquid sample can flow along a flow path successively through the inlet, the first junction, the detection cell, the second junction and the outlet;
the first junction including
(i) first junction walls, and
(ii) a first arm which, with the first junction walls, defines a first passageway of substantially annular cross-section through which the liquid sample flows as it flows from the inlet to the detection cell; and
the second junction including
(i) second junction walls, and
(ii) a second arm which, with the second junction walls, defines a second passageway of substantially annular cross-section through which the liquid sample flows as it flows from the detection cell to the outlet.

In the detection device:
(a) the outer surfaces of each of the first and second arms form a cylinder having a first substantially constant diameter;
(b) the first junction walls form a cylindrical shell which (i) has a second substantially constant diameter which is larger than the first diameter, and (ii) with the outer surfaces of the first arm, defines a substantially annular region;
(c) the second junction walls form a cylindrical shell which (i) has the second substantially constant diameter, and (ii) with the outer surfaces of the second arm, defines a substantially annular region;
(d) the walls of the detection cell form a cylindrical shell having the second substantially constant diameter;

(a) the device comprises a substantially monolithic body including (i) an inlet channel, (ii) an outlet channel, (iii) a channel corresponding to the conduit, the first and second junctions, and extensions of the first and second junctions. Further elements are specified in claim 1.

Preferably the inlet comprises a first capillary tube which lies within the inlet channel;
the outlet comprises a second capillary tube which lies within the outlet channel;
a first elongate member lies within the extension of the first junction and extends into the first junction to provide the first arm; and
a second elongate member lies within the extension of the second junction and extends into the second junction to provide a second arm.

Preferably the walls of the detection cell have an index of refraction which is higher than the index of refraction of the fluid sample; and/or
the cell body is substantially transparent to selected wavelengths of light such that fluorescence, degenerate four-wave mixing, Raman or refractive index measurements can be taken through the cell body.

An exemplary method of making a device comprises:
(1) etching a first pattern onto a face of a first wafer, preferably a fused silica wafer, the first pattern comprising
   (a) a trench which has a substantially semicircular cross-section and a first longitudinal axis and which corresponds to the inlet,
   (b) a trench which has a substantially semicircular cross-section and a second longitudinal axis and which corresponds to the outlet,
   (c) a trench which has a substantially semicircular cross-section and a third longitudinal axis and which corresponds to the conduit of the detection cell, the first and second junctions, and extensions of the first and second junctions;
(2) etching a second pattern onto a face of a second wafer, preferably a fused silica wafer, the second pattern being substantially a mirror image of the first pattern;
(3) securing the etched faces of the first and second wafers together so that the patterns are matched, thus forming a composite, preferably a substantially monolithic body, comprising channels corresponding to (a) the inlet, (b) the outlet, and (c) the conduit of the detection cell, the first and second junctions and extensions of the first and second junctions;
(4) securing capillary tubes in the channels corresponding to the inlet and outlet; and
(5) before or after step (4), positioning elongate members so that respective first longitudinal portions thereof are located respectively in the extensions of the first and second junctions and respective second longitudinal portions thereof are located respectively in the first and second junctions to provide the first and second arms.

### BRIEF DESCRIPTION OF THE DRAWINGS

The invention is illustrated in the accompanying drawings, which are schematic and not to scale, and in which
Figure 1 is a cross-section through a device of the invention, and
Figure 2 is a cross-section on line II-II of Figure 1.

### DETAILED DESCRIPTION OF THE INVENTION

In the Summary of the Invention above and in the Detailed Description of the Invention and the claims below, and in the accompanying drawings, reference is made to particular features of the invention. It is to be understood that the disclosure of the invention in this specification includes all appropriate combinations of such particular features. For example, where a particular feature is disclosed in the context of a particular aspect or embodiment of the invention, or a particular Figure, or a particular claim, that feature can also be used, to the extent appropriate, in combination with and/or in the context of other particular aspects and embodiments of the invention, and in the invention generally.

The term "comprises", and grammatical equivalents thereof, are used herein to mean that other components, ingredients, steps etc. are optionally present in addition to the component(s), ingredient(s), step(s) specifically listed after the term "comprises". The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40 %. When, in this specification, a range is given as "(a first number) to (a second number)" or "(a first number) - (a second number)", this means a range whose lower limit is the first number and whose upper limit is the second number. Where reference is made herein to "first" and "second" components, e.g. first and second junctions, this is generally done for identification purposes; unless the context requires otherwise, the first and second components can be the same or different, and reference to a first component does not mean that a second component is necessarily present (though it may be present). The numbers given herein should be construed with the latitude appropriate to their context and expression; for example, each number is subject to variation which depends on the accuracy with which it can be measured by methods conventionally used by those skilled in the art. The terms plural and plurality are used herein to denote two or more than two items. The term "substantially monolithic" is used herein to denote an article which has the same composition throughout and in which any interfaces have substantially disappeared.

In preferred embodiments, each of the components of the device defines a flow path whose cross-section is substantially circular or, in the junctions, an annulus of substantially constant width. The invention is, therefore, often described with reference to such preferred embodiments. It is to be understood, however, that the invention includes devices in which this is not true. For example, the arm can be off-centered in the junction, and/or can be of non-circular cross-section (for example the arm can be one of the commercially available optical fibers having a non-circular cross-section); in either of these cases, the annular cross-section within the junctions will be irregular in width. Less probably (because it increases dispersion), one or more of the inlet, conduit, and outlet can have a non-circular, e.g. generally rectangular, cross-section.

### First and Second Junctions, and the Arms located in them

Liquid flowing through a cylindrical conduit normally has a parabolic velocity profile which causes axial dispersion. The substantially annular passageways in the first and second junctions modify the flow of the liquid sample through the conduit so that the velocity of the liquid is higher near the walls of the conduit as the liquid enters and leaves the detection cell. The flow modification also helps to reduce the likelihood that there are substantial volumes within the conduit where the flow velocity is low enough to cause substantial dispersion due to diffusion into and out of low velocity volumes.

In many embodiments, the arms are not only part of the substantially annular passageways, but also transmit light to and/or from the detection cell. Such arms are preferably optical fibers. Light can then be directed at the sample from one or both of the optical fibers and/or (if the cell body is sufficiently transparent) through the cell body; the effect of the light on the sample can be observed through one or both of the optical fibers, and/or (if the cell body is sufficiently transparent) through the cell body. In other embodiments, the arms function only to modify the liquid flow and the sample is examined as it flows through the cell by viewing the sample through the cell body (which must of course be substantially transparent to the light directed at the sample and the light emitted by the sample).

The arms preferably have a substantially circular cross-section so that the outer surfaces are in the form of a cylinder. The diameter of the arm (or equivalent diameter, i.e. the diameter of a circle having the same cross-sectional area as the arm, if the arm has a noncircular cross-section) can be for example 50-150 micrometers. The walls of the junctions preferably have substantially circular cross-sections so that they form, with the outer surfaces of the arms, narrow passageways having a substantially annular cross-section. The width of the annular passageway (or average width if the width is irregular) is for example 1 to 5 micrometers. The annular passageway in the first junction can be the same as or different from the annular passageway in the second junction. The walls of the junctions are preferably extensions of the walls of the conduit, e.g. so that the walls of the conduit and the walls of the junctions form the interior of a substantially cylindrical shell.

Flow through an annular region can cause more dispersion than flow (with the normal parabolic velocity profile) through a cylindrical tube of the same cross-sectional area and length. The length of the annular passageway is, therefore, preferably at most 40 times, particularly at most 10 times, for example 1-40 times, preferably 4-10 times, the diameter of the arm (the length of the annular passageway being measured from the centerline of the inlet or outlet to the face of the corresponding arm). Thus, for an optical fiber having a diameter of 110 micrometers, the length of the annular passageway may be 50-4000 micrometers.

The average width of the annular passageway is for example 0.001 times to 0.2 times, preferably 0.01 times to 0.05 times, the diameter of the arm (or, if the arm has a noncircular cross-section, the equivalent diameter, i.e. the diameter of a circle having the same cross-sectional area as the arm). Thus, for an optical fiber having a diameter of about 110 micrometers, the annular space around it may for example have a width of 2-3 micrometers.

### The Detection Cell and Examination of the Sample

Known techniques can be used to examine the sample. Light directed at the sample can for example be ultraviolet, visible or infrared light, and can for example be light from a laser, light from a broad spectrum lamp, e.g. a deuterium lamp, or selected portions of the light from a broad spectrum lamp. The light can for example be optimized and focused onto the end of an optical fiber arm. Any property of the light from the sample can be examined, for example refractive index, absorbance (e.g. using a CCD array-based spectrometer), fluorescence, or scattering (e.g., degenerate four-wave mixing or Raman generation).

Subject to manufacturing requirements and, in some embodiments, the ability to examine the sample as it passes through the detection cell, the detection cell can be composed of any suitable material, e.g. silica, silicon, quartz, glass, other ceramics, or plastics.

### Arrangement of the Inlet, Detection Cell and Outlet

The axis of the detection cell is at a first angle to the axis of the inlet and at a second angle to the axis of the outlet. Each of the first and second angles, which may be the same or different, is for example 10° to 170°, e.g. 90°. Preferably all the axes lie in the same plane.

In one embodiment, the inlet, before it reaches the first junction, includes a bend at an angle opposite to the first angle, so that the liquid, before entering the detection cell, follows a generally Z-shaped path whose length is preferably substantially the same at all points along the cross-section of the flow path. This can help to reduce dispersion. Similarly, particularly if the sample is to be further examined after it has left the device, the inlet, cell and outlet are preferably arranged in a generally Z-shaped (or other) configuration such that the path length is substantially the same at all points along the cross-section of the flow path.

The flow path through the device preferably has a substantially circular cross-section except in the annular passageways in the junctions, since this helps to reduce differences in flow velocities, which result in dispersion. The inner diameters of the inlet, cell and outlet can be the same or different. In some embodiments, the inlet and outlet are substantially identical capillary tubes whose inner diameter is less than the diameter of the conduit of the detection cell, e.g. are standard commercially available capillary tubes which can be easily connected to other microfluidic devices. The outer diameter of the capillaries can for example be a little less than the inner diameter of the conduit. In a specific example, the capillaries have an outer diameter of about 110 micrometers and an inner diameter of about 30 micrometers. The device can then be manufactured by etching a substrate to provide channels having the same depth and corresponding to the inlet, conduit and outlet, and gluing capillaries into the inlet and outlet channels.

### Associated Devices

The devices of the invention are very small and can be placed close to the µLC columns from which the liquid samples are obtained, thus reducing the dispersion which results from long path lengths. The novel devices can be easily incorporated into microfabricated, chip-based full chromatographic separation systems. Samples which have passed through the device can be discarded, or can be further examined in one or more other detection devices, e.g. an evaporative light-scattering detection (ELSD) device or a mass spectrometer, for example directly or following deposition onto a MALDI (matrix-assisted laser desorption and ionization) plate.

### Manufacture of the Devices

Any appropriate method can be used to manufacture the devices, for example methods making use of one or more of laser machining, embossing, molding, casting or micromachining. Reference may be made, for example, to J. Micromech. Microeng., 11, 257 (2001), Grosse et al, and to US Patent Publication No 2004-0011648 (Neyer et al).

In the method of the third aspect of the invention, the wafers can be wafers of any desired size, e.g. a standard size such as 0.5-1 mm thick and about 100 mm in diameter, and can be composed of silica, glass, silicon, quartz or another ceramic material. The wafers can be cleaned to make them more hydrophilic, e.g. by washing with acid and base baths and/or by megasonic cleaning. The patterns can contain other features, e.g. marks to assist alignment of the wafers in step (3) and/or channels for electrical leads.

The etching can be carried out in one or more stages, for example a first shallow etch of about 1.5 mu to make alignment marks and/or to provide additional space for the annular passageways, and a second deep etch of about 56 mu to provide the trenches referred to above, preferably using an isotropic etching method in order to provide trenches having a substantially semicircular cross-section, for example using HF as the etchant.

Especially when using silicon, glass or quartz wafers, the method preferably comprises, before steps (1) and (2),
(a) coating the faces of the first and second wafers with a protective layer of a material which will reduce defects in the etched channels, preferably silicon, e.g. a layer 1000-3000 Angstroms thick applied by low-pressure chemical vapor deposition;
(b) forming photoresists corresponding to the patterns on the protective layers;
(c) etching exposed portions of the protective layers, using wet or dry chemical etching;
(d) after step (1) and before step (3), removing the resists, e.g. using a mixture of sulfuric acid and hydrogen peroxide, and the remainder of the protective layers.

In step (3), the two patterned wafers must be aligned, e.g. to within 3 micrometers. This can be done with the aid of commercially available wafer alignment devices, e.g. the Electronic Visions EV 520 aligner. The wafers are then secured together, for example by heating silica wafers to a temperature of about 1165°C for 4-8 hours, thus producing a composite which will withstand very high pressures, e.g. 350 kg/cm² (5000 psi) and in which the interface has substantially disappeared so that the composite is a solid component containing microconduits of substantially circular cross-section.

In step (5), the arms can be secured in the channels with any suitable adhesive, e.g. a UV-activated optical cement, or an inorganic seal, such as a solgel or aerogel. In step (4), the capillaries can be secured in the channels in the same way or directly fused to the wafers, for example using a carbon dioxide laser.

The devices are very small, and it is preferred to manufacture a composite corresponding to a plurality of devices, using patterns corresponding to the plurality of devices, and then, before steps (4) and (5), to divide the composite into individual devices, e.g. using a diamond saw. Preferably, before dividing the composite, the channels are filled with wax or another sacrificial material which minimizes particulate contamination of the channels when the wafers are divided and which is removed from the devices, e.g. by pyrolysis at 650°C or higher, after the division.

### The Drawings

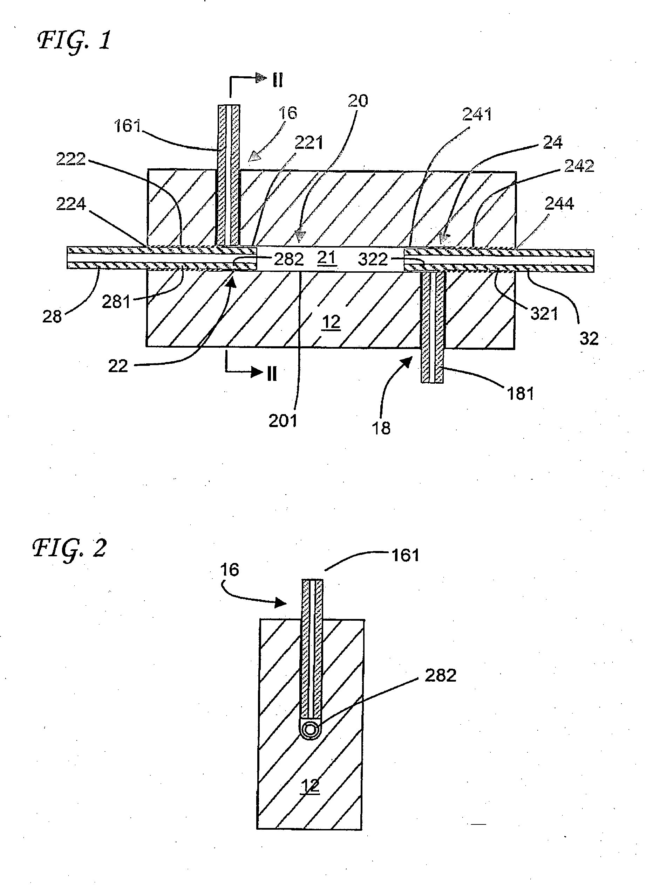

Figures 1 and 2 illustrate a device of the invention. A cell body 12 comprises inlet 16 formed of a capillary tube 161; outlet 18 formed of a capillary tube 181; detection cell 20 having walls 201 which form a cylindrical conduit 21; junction 22 between the inlet 16 and the detection cell 20; and junction 24 between the outlet 18 and the detection cell 20. The junctions have walls 221 and 241 which are coaxial extensions of the walls 201, and there are further coaxial extensions 222 and 242 of the walls 221 and 241 of the junctions. Portions 281 and 321 of optical fibers 28 and 32 are secured within, but spaced-apart from, the further extensions 222 and 242 by layers of adhesive 224 and 244. Portions 282 and 322 of the optical fibers 28 and 32 extend into the junctions 22 and 24, and are spaced-apart from the walls 221 and 241 of the junctions, thus forming annular spaces through which liquid flows as it enters and leaves the detection cell 20.

## Claims

1. A micro fluidic detection device for examining a liquid sample, the device comprising an inlet (16) having a first longitudinal axis;
an outlet (18) having a second longitudinal axis;
a detection cell (20) which
comprises walls (201) defining a conduit (21) which is in fluid connection with the inlet (16) and the outlet (18), and
has a third longitudinal axis, the third longitudinal axis being at an angle to the first longitudinal axis and at an angle to the second longitudinal axis;
a first junction (22) which lies between the inlet (16) and the detection cell (20); and
a second junction (24) which lies between the detection cell (20) and the outlet (18);
whereby a liquid sample can flow along a flow path successively through the inlet (16), the first junction (22), the detection cell (20), the second junction (24) and the outlet (18);
wherein the first junction (22) includes
(i) first junction walls (221), and
(ii) a first optical fiber (28) having a portion located in the first junction (22) which, with the first junction wall (221), defines a first passageway of substantially annular cross-section through which the liquid sample flows as it flows from the inlet (16) to the detection cell (20);
wherein the second junction (24) includes
(i) second junction walls (241), and
(ii) a second optical fiber (32) having a portion located in the second junction (24) which, with the second junction walls (241), defines a second passageway of substantially annular cross-section through which the liquid sample flows as it flows from the detection cell (20) to the outlet (18);
wherein the outer surfaces of each of the first and second optical fibers (28, 32) form a cylinder having a first substantially constant diameter;
wherein the first junction walls (221) form a cylindrical shell which has a second substantially constant diameter which is larger than the first diameter, and with the outer surfaces of the first optical fiber (28), defines a substantially annular region;
wherein the second junction walls (241) form a cylindrical shell which has the second substantially constant diameter, and with the outer surfaces of the second optical fiber (32), defines a substantially annular region;
wherein the walls (201) of the detection cell (20) form a cylindrical shell having the second substantially constant diameter; and
wherein each of the substantially annular first and second passageways has a length which is 1-10 times the first diameter;
**characterized in that**
the device comprises a substantially monolithic body (12) composed of ceramics material, the body including the inlet (16), the outlet (18), the detection cell (20) forming the conduit (21), the first and second junctions (22, 24), and extensions (222, 242) of the first and second junctions for receiving the first and second optical fibers (28, 32); and
the inner surface of the conduit (21) is composed of said ceramic material and is exposed to the fluid flowing along said flow path.

2. A device according to claim 1, wherein the first and second optical fibers (28, 32) can transmit light to and from the detection cell (20).

3. A device according to claim 2, wherein the first and second optical fibers (28, 32) are substantially identical optical fibers.

4. A device according to any one of the preceding claims, wherein each of the substantially annular first and second passageways has a length which is 4-10 times the first diameter.

5. A device according to claim 4, wherein the average width of each of the substantially annular first and second passageways is 0.001 to 0.2 times, preferably 0.01 times to 0.05 times, the first diameter.

6. A device according to any one of the preceding claims, wherein the inlet (16), the detection cell (20) and the outlet (18) provide a generally Z-shaped flow path whose length is the same at all points along the cross-section of the flow path.

7. A device according to any one of the preceding claims, wherein each of the inlet (16) and the outlet (18) is provided by a capillary tube (161, 181) having an outer diameter which is less than the second diameter of the conduit (21).

8. A device according to any one of the preceding claims, wherein portions (281, 321) of the first and second optical fibers (28, 32) are secured within, but spaced-apart from, the extensions (222, 242) by layers of adhesive (224, 244).

## Patentansprüche

1. Eine mikrofluidische Nachweiseinrichtung zum Untersuchen einer Flüssigkeitsprobe, wobei die Einrichtung aufweist:
einen Einlass (16) mit einer ersten Längsachse;
einen Auslass (18) mit einer zweiten Längsachse;
eine Nachweiszelle (20), die
Wände (201) aufweist, durch die eine Leitung (21) abgegrenzt wird, die in Fluid-Verbindung mit dem Einlass (16) und dem Auslass (18) steht, und
eine dritte Längsachse hat, wobei die dritte Längsachse in einem Winkel zur
ersten Längsachse und in einem Winkel zur zweiten Längsachse steht;
eine erste Verbindung (22), die zwischen dem Einlass (16) und der Nachweiszelle (20) liegt; und
eine zweite Verbindung (24), die zwischen der Nachweiszelle (20) und dem Auslass (18) liegt;
wodurch eine Flüssigkeitsprobe entlang eines Fließpfades nacheinander durch den Einlass (16), die erste Verbindung (22), die Nachweiszelle (20), die zweite Verbindung (24) und den Auslass (18) fließen kann;
wobei die erste Verbindung (22) umfasst:
(i) erste Verbindungs-Wände (221), und
(ii) eine erste optische Faser (28) mit einem in der ersten Verbindung (22) gelegenen Teil, der mit der ersten Verbindungs-Wand (221) einen ersten Durchgang mit im Wesentlichen ringförmigem Querschnitt abgrenzt, durch den die Flüssigkeitsprobe hindurchfließt, während sie vom Einlass (16) zur Nachweiszelle (20) fließt;
wobei die zweite Verbindung (24) umfasst:
(i) zweite Verbindungs-Wände (241), und
(ii) eine zweite optische Faser (32) mit einem in der zweiten Verbindung (24) gelegenen Teil, der mit den zweiten Verbindungs-Wänden (241) einen zweiten Durchgang mit im Wesentlichen ringförmigem Querschnitt abgrenzt, durch den die Flüssigkeitsprobe hindurchfließt, während sie von der Nachweiszelle (20) zum Auslass (18) fließt;
wobei die Außenflächen jeweils der ersten und zweiten optischen Faser (28, 32) einen Zylinder ausbilden mit einem ersten im Wesentlichen konstanten Durchmesser;
wobei die ersten Verbindungs-Wände (221) eine zylindrische Schale ausbilden, die einen zweiten im Wesentlichen konstanten Durchmesser hat, der größer ist als der erste Durchmesser, und mit den Außenflächen der ersten optischen Faser (28) einen im Wesentlichen ringförmigen Bereich abgrenzt;
wobei die zweiten Verbindungs-Wände (241) eine zylindrische Schale ausbilden, die den zweiten im Wesentlichen konstanten Durchmesser hat, und mit den Außenflächen der zweiten optischen Faser (32) einen im Wesentlichen ringförmigen Bereich abgrenzt;
wobei die Wände (201) der Nachweiszelle (20) eine zylindrische Schale ausbilden, die den zweiten im Wesentlichen konstanten Durchmesser hat; und
wobei jeder der im Wesentlichen ringförmigen ersten und zweiten Durchgänge eine Länge hat, die 1-10-mal dem ersten Durchmesser entspricht;
**dadurch gekennzeichnet, dass**
die Einrichtung einen im Wesentlichen monolithischen Körper (12) bestehend aus keramischem Material aufweist, wobei der Körper den Einlass (16), den Auslass (18), die die Leitung (21) ausbildende Nachweiszelle (20), die ersten und zweiten Verbindungen (22, 24), und Erweiterungen (222, 242) der ersten und zweiten Verbindungen zur Aufnahme der ersten und zweiten optischen Fasern (28, 32) umfasst; und
die Innenfläche der Leitung (21) aus dem keramischen Material besteht und dem entlang des Fließpfades dem fließenden Fluid ausgesetzt ist.

2. Eine Einrichtung nach Anspruch 1, wobei die ersten und zweiten optischen Fasern (28, 32) Licht zu und von der Nachweiszelle (20) übertragen können.

3. Eine Einrichtung nach Anspruch 2, wobei die ersten und zweiten optischen Fasern (28, 32) im Wesentlichen identische optische Fasern sind.

4. Eine Einrichtung nach irgendeinem der vorangehenden Ansprüche, wobei jeder der im Wesentlichen ringförmigen ersten und zweiten Durchgänge eine Länge hat, die 4-10-mal dem ersten Durchmesser entspricht.

5. Eine Einrichtung nach Anspruch 4, wobei die durchschnittliche Breite von jedem der im Wesentlichen ringförmigen ersten und zweiten Durchgänge 0,001- bis 0,2-mal, vorzugsweise 0,01-mal bis 0,05-mal, dem ersten Durchmesser entspricht.

6. Eine Einrichtung nach irgendeinem der vorangehenden Ansprüche, wobei der Einlass (16), die Nachweiszelle (20) und der Auslass (18) einen im Allgemeinen Z-förmigen Fließpfad vorsehen, dessen Länge an allen Punkten entlang des Querschnitts des Fließpfades gleich ist.

7. Eine Einrichtung nach irgendeinem der vorangehenden Ansprüche, wobei jeweils der Einlass (16) und der Auslass (18) vorgesehen ist als ein Kapillarröhrchen (161, 181) mit einem Außendurchmesser, der kleiner ist als der zweite Durchmesser der Leitung (21).

8. Eine Einrichtung nach irgendeinem der vorangehenden Ansprüche, wobei Teile (281, 321) der ersten und zweiten optischen Fasern (28, 32) innerhalb der Erweiterungen (222, 242) befestigt sind, davon aber durch Schichten von Klebstoff (224, 244) beabstandet sind.

## Revendications

1. Dispositif de détection micro-fluidique destiné à examiner un échantillon liquide, le dispositif comprenant un orifice d'entrée (16) ayant un premier axe longitudinal,
un orifice de sortie (18) ayant un deuxième axe longitudinal,
une cellule de détection (20) qui
comprend des parois (201) définissant un conduit (21) qui est en connexion fluide avec l'orifice d'entrée (16) et l'orifice de sortie (18), et
a un troisième axe longitudinal, le troisième axe longitudinal étant à un certain angle par rapport au premier axe longitudinal et à un certain angle par rapport au deuxième axe longitudinal,
une première jonction (22) qui se situe entre l'orifice d'entrée (16) et la cellule de détection (20), et
une deuxième jonction (24) qui se situe entre la cellule de détection (20) et l'orifice de sortie (18),
grâce à quoi un échantillon liquide peut s'écouler le long d'un trajet d'écoulement successivement à travers l'orifice d'entrée (16), la première jonction (22), la cellule de détection (20), la deuxième jonction (24) et l'orifice de sortie (18),
dans lequel la première jonction (22) inclut
(i) des premières parois de jonction (221), et
(ii) une première fibre optique (28) ayant une partie localisée dans la première jonction (22) qui, avec la première paroi de jonction (221), définit un premier passage de section transversale globalement annulaire à travers lequel l'échantillon liquide s'écoule lorsqu'il s'écoule de l'orifice d'entrée (16) jusqu'à la cellule de détection (20),
dans lequel la deuxième jonction (24) inclut
(i) des deuxièmes parois de jonction (241), et
(ii) une deuxième fibre optique (32) ayant une partie localisée dans la deuxième jonction (24) qui, avec la deuxième paroi de jonction (241), définit un deuxième passage de section transversale globalement annulaire à travers lequel l'échantillon liquide s'écoule lorsqu'il s'écoule de la cellule de détection (20) jusqu'à l'orifice de sortie (18),
dans lequel les surfaces extérieures de chacune des première et deuxième fibres optiques (28, 32) forment un cylindre ayant un premier diamètre globalement constant,
dans lequel les premières parois de jonction (221) forment une enveloppe cylindrique qui a un deuxième diamètre globalement constant qui est plus grand que le premier diamètre, et avec les surfaces extérieures de la première fibre optique (28), définit une région globalement annulaire,
dans lequel les deuxièmes paroi de jonction (241) forment une enveloppe cylindrique qui a le deuxième diamètre globalement constant, et avec les surfaces extérieures de la deuxième fibre optique (32), définit une région globalement annulaire,
dans lequel les parois (201) de la cellule de détection (20) forment une enveloppe cylindrique ayant le deuxième diamètre globalement constant, et
dans lequel chacun des premier et deuxième passages globalement annulaires a une longueur qui est 1 à 10 fois le premier diamètre,
**caractérisé en ce que**
le dispositif comprend un corps globalement monolithique (12) composé d'un matériau céramique, le corps incluant l'orifice d'entrée (16), l'orifice de sortie (18), la cellule de détection (20) formant le conduit (21), les première et deuxième jonctions (22, 24), et des extensions (222, 242) des première et deuxième jonctions pour recevoir les première et deuxième fibres optiques (28, 32), et
la surface intérieure du conduit (21) est composée dudit matériau céramique et est exposée au fluide s'écoulant à travers le long dudit trajet d'écoulement.

2. Dispositif selon la revendication 1, dans lequel les première et deuxième fibres optiques (28, 32) peuvent transmettre de la lumière vers et depuis la cellule de détection (20).

3. Dispositif selon la revendication 2, dans lequel les première et deuxième fibres optiques (28, 32) sont des fibres optiques globalement identiques.

4. Dispositif selon l'une quelconque des revendications précédentes, dans lequel chacun des premier et deuxième passages globalement annulaires a une longueur qui est 4 à 10 fois le premier diamètre.

5. Dispositif selon la revendication 4, dans lequel la largeur moyenne de chacun des premier et deuxième passages globalement annulaires est de 0,001 à 0,2 fois, de préférence de 0,01 fois à 0,05 fois, le premier diamètre.

6. Dispositif selon l'une quelconque des revendications précédentes, dans lequel l'orifice d'entrée (16), la cellule de détection (20) et l'orifice de sortie (18) fournissent un trajet d'écoulement globalement en forme de Z dont la longueur est identique à tous les points le long de la section transversale du trajet d'écoulement.

7. Dispositif selon l'une quelconque des revendications précédentes, dans lequel chacun de l'orifice d'entrée (16) et de l'orifice de sortie (18) est doté d'un tube capillaire (161, 181) ayant un diamètre extérieur qui est inférieur au deuxième diamètre du conduit (21).

8. Dispositif selon l'une quelconque des revendications précédentes, dans lequel des parties (281, 321) des première et deuxième fibres optiques (28, 32) sont fixées dans, mais en étant écartées, les extensions (222, 242) par des couches d'un élément adhésif (224, 244).
